# EUROPÄISCHE PATENTSCHRIFT

(11) **EP 2 268 935 B1**
(45) Veröffentlichungstag und Bekanntmachung des Hinweises auf die Patenterteilung: **27.01.2016**
(21) Anmeldenummer: 09730289.7
(22) Anmeldetag: 02.04.2009
(51) Int. Cl.: F16D 25/08, F15B 15/28

(54) **VORRICHTUNG ZUM BETÄTIGEN EINER KUPPLUNG**
DEVICE FOR ACTUATING A COUPLING
DISPOSITIF D'ACTIONNEMENT D'UN EMBRAYAGE

(30) Priorität: 09.04.2008 DE 102008018093
(43) Veröffentlichungstag der Anmeldung: 05.01.2011
(73) Patentinhaber: KNORR-BREMSE Systeme für Nutzfahrzeuge GmbH, 80809 München (DE)
(72) Erfinder: DRIENYOVSZKI, Sandor, H-1042 Budapest (HU); CZANEK, Peter, H-1162 Budapest (HU); SIPOS, Andras, H-1094 Budapest (HU)
(74) Vertreter: Mattusch, Gundula
(86) Internationale Anmeldenummer: PCT/EP2009/002395
(87) Internationale Veröffentlichungsnummer: WO 2009/124684

(56) Entgegenhaltungen:
- EP-A- 0 834 669
- FR-A- 2 842 267
- US-A- 4 623 840
- US-A- 4 628 499
- US-A- 4 855 675
- BYSTROM E P ET AL: "A displacement sensor for nonmetallic hydraulic cylinders" IEEE SENSORS JOURNAL, IEEE SERVICE CENTER, NEW YORK, NY, US, Bd. 3, Nr. 6, 1. Dezember 2003 (2003-12-01), Seiten 818-826, XP011104229 ISSN: 1530-437X

## Beschreibung

Die Erfindung betrifft eine Vorrichtung zum Betätigen einer Kupplung nach dem Oberbegriff von Anspruch 1.

Insbesondere bei Nutzfahrzeugen werden Kupplungssysteme heutzutage in der Regel mit einer hydraulischen Kupplungsbetätigung ausgerüstet. Dabei steht das Kupplungspedal mit dem Kolben einer Pedalhydraulik in Verbindung. Über eine Hydraulikleitung wirkt der Pedaldruck auf einen kupplungsnahen Hydraulikzylinder. Der Kolben dieses Hydraulikzylinders wirkt auf die Kupplung ein. Zwischen den Kolben dieses kupplungsnahen Hydraulikzylinders und die Kupplung selbst kann noch ein Pneumatik-Verstärker zwischengeschaltet sein.

Es hat sich herausgestellt, dass es für den Fahrer eines Nutzfahrzeugs wichtig ist, eine Rückmeldung über den Kuppelvorgang zu erhalten. Zu diesem Zweck hat es sich als vorteilhaft erwiesen, die Position des Kolbens des kupplungsnahen Hydraulikzylinders mit einem Sensor abzutasten. Es wurde bereits vorgeschlagen, mit dem Kolben ein Übertragungsgestänge zu verbinden. Dieses Übertragungsgestänge kann wiederum einen Sensor betätigen, der an beliebiger Stelle platziert werden kann. Durch das Übertragungsgestänge könnte auch eine Übersetzungsfunktion wahrgenommen werden, so dass die Betätigungsstrecke des Kolbens auf die meist kleinere Betätigungsstrecke des Sensors übersetzt werden kann. Es hat sich jedoch herausgestellt, dass diese Art der Erfassung der Kolbenstellung sehr aufwändig und teuer ist. Zusätzlich ist auch eine hohe Störanfälligkeit gegeben, da bei Fehlfunktionen des Kupplungssystems hohe Kräfte auf den Sensor und das Übertragungsgestänge wirken können.

Eine gattungsgemäße Vorrichtung zum Betätigen einer Kupplung ist aus der FR 2 842 267 A bekannt.

Der Erfindung liegt die Aufgabe zugrunde, eine gattungsgemäße Vorrichtung zum Betätigen einer Kupplung derart weiterzubilden, dass eine sichere Positionsbestimmung des Kolbens ermöglicht wird. Weiterhin soll die Messeinrichtung zur Positionsbestimmung keinen zusätzlichen Platz beanspruchen und nur geringe Zusatzkosten verursachen, wobei die Vorrichtung in bewährter Weise die geforderte Stabilität aufweisen soll.

Gelöst wird die Aufgabe gemäß der Erfindung durch eine Vorrichtung zum Betätigen einer Kupplung mit den Merkmalen von Anspruch 1. Vorteilhafte Weiterbildungen und Ausgestaltungen ergeben sich aus den Unteransprüchen.

Erfindungsgemäß wird in der Wandung des Hydraulikzylinders eine Spule vorgesehen. Die Messeinrichtung ist auf diese Weise in den Hydraulikzylinder integriert und benötigt keinerlei zusätzlichen Platz. In Anbetracht der immer enger werdenden Platzverhältnisse bei modernen Motoren ist dieser Aspekt von besonderer Bedeutung. Weiterhin findet die Messung der Kolbenposition berührungslos statt. Verschleiß kann daher ausgeschlossen werden. Da keine außenliegenden Teile benötigt werden, kann eine Funktionsstörung durch Beschädigung praktisch nicht auftreten.

Vorteilhaft weist die Messeinrichtung eine Einrichtung zur Bestimmung der Induktivität der Spule auf. Dabei wird der Kolben, der sich innerhalb der Spule bewegt, als Spulenkern genutzt. Mit der Verschiebung des Spulenkerns bzw. des Kolbens innerhalb der Spule ändert sich dementsprechend ihre Induktivität. So nimmt bei einem Kolben, der aus einem metallischen Werkstoff hergestellt ist, die Induktivität der Spule ab, je weiter der Kolben in die Spule hineingeschoben wird. Dementsprechend erhöht sich die Induktivität, je weiter der Kolben durch die Hydraulikflüssigkeit aus dem Arbeitsraum des Hydraulikzylinders, und damit aus der Spule, hinausgedrückt wird. Sollte beispielsweise ein Kolben aus Kunststoff verwendet werden, kehren sich diese Verhältnisse um. Hier erhöht sich die Induktivität wenn der Kolben in die Spule hineingeschoben wird, bzw. nimmt ab je weiter der Kolben aus der Spule hinausbewegt wird.

Zwischen dem Hydraulikzylinder und der Kupplung ist ein von dem Kolben betätigter Pneumatik-Verstärker vorgesehen. Um die Kupplung in die ausgerückte Stellung zu drücken, ist bei Nutzfahrzeugen eine nicht unerhebliche Kraft erforderlich. Diese Kraft ist schwerlich von dem Fahrer des Nutzfahrzeugs durch den Druck auf das Kupplungspedal aufzubringen. Der Kolben des kupplungsnahen Hydraulikzylinders, auf den der Druck der Pedalhydraulik einwirkt, ist deshalb mit dem Pneumatik-Verstärker gekoppelt, der die durch das Hydrauliksystem von dem Kupplungspedal übertragene Kraft verstärkt und auf die Kupplung überträgt.

Damit der Hydraulikzylinder und der Pneumatik-Verstärker eng aneinander montiert werden können, ist in dem Hydraulikzylinder ein den Kolben umschließendes Dichtungspaket zur Abdichtung des Arbeitsraums des Hydraulikzylinders gegen den Pneumatik-Verstärker vorgesehen. Hiermit soll insbesondere verhindert werden, dass unter Hochdruck stehende Luft aus dem Arbeitsraum des Pneumatik-Verstärkers in den Arbeitsraum des Hydraulikzylinders eindringt und so zu Funktionsstörungen führt. Das Dichtungspaket ist aus mehreren einzelnen Ringdichtungen aufgebaut und kann so genau an die vorherrschenden Verhältnisse angepasst werden.

Der Hydraulikzylinder ist erfindungsgemäß aus einem metallischen Werkstoff gefertigt. Derartige Hydraulikzylinder haben sich seit langem bewährt und es kann gewährleistet werden, dass sie dem Innendruck durch die Hydraulikflüssigkeit in ihrem Arbeitsraum standhalten.

Bei Verwendung solcher metallischen Hydraulikzylinder ist erfindungsgemäß die Spule in eine Kunststoffhülse eingespritzt. Dabei ist es sehr effizient, den Spritzvorgang innerhalb des Hydraulikzylinders vorzunehmen. Hierzu wird die Spule und ein entfernbarer Kern vor dem Spritzvorgang in den Hydraulikzylinder eingebracht. Nach dem Spritzvorgang und dem Abkühlen des Kunststoffs wird der Kern entfernt. In dem Hydraulikzylinder verbleibt eine Kunststoffhülse, in die die Spule integriert ist.

Bei einer nicht beanspruchten anderen Ausführungsform der Erfindung ist der Hydraulikzylinder selbst aus Kunststoff gefertigt. Bei entsprechender Auswahl des Kunststoffes und bei entsprechender äußerer Formgebung des Hydraulikzylinders kann auch bei dieser Ausführungsform eine Festigkeit garantiert werden, die dem Druck im Arbeitsraum des Hydraulikzylinders problemlos Stand hält.

Ein solcher Kunststoff-Hydraulikzylinder wird in vorteilhafter Weise ebenfalls im Spritzgussverfahren hergestellt. Hierbei wird die Spule direkt in das Werkzeug eingelegt. Durch den Spritzgussvorgang entsteht so ein Hydraulikzylinder, in dessen Zylinderwand die Spule direkt integriert ist. Hier muss im Gegensatz zu dem vorgehend beschriebenen Ausführungsbeispiel keine zusätzliche Kunststoffhülse mehr vorgesehen werden. Ein solcher Kunststoff-Hydraulikzylinder kann äußerst kostengünstig gefertigt werden.

Über die Spule soll nicht nur gemessen werden, ob sich die Kupplung in eingerückter oder ausgerückter Stellung befindet, sondern es soll ebenfalls der Verschleiß der Kupplung bestimmt werden. Hierzu ist es erforderlich, dass der Kolben bei eingerückter Kupplung weder in neuem Zustand der Kupplung noch in verschlissenem Zustand an eine Stirnwand des Arbeitsraums anstößt. Nur wenn der Kolben frei beweglich ist, kann er ein zuverlässiges Messergebnis für den Verschleiß der Kupplung liefern. Der Hydraulikzylinder wird deshalb bei der Montage so eingestellt, dass das freie Ende des Kolbens bei eingerückter, unverbrauchter Kupplung in etwa bis zur Mitte in den Arbeitsraum hineinragt. Der Kolben und der Hydraulikzylinder sind so dimensioniert, dass der Kolben bei eingerückter, verbrauchter Kupplung bis über die Mitte in den Arbeitsraum hineinragt. Gleichzeitig stößt jedoch das freie Ende des Kolbens auch bei vollkommen verbrauchter Kupplung nicht an der Stirnseite des Arbeitsraums an.

In ausgerückter Stellung spielt der Verschleißzustand der Kupplung für die Position des Kolbens im Arbeitsraum des Hydraulikzylinders keine Rolle. Das freie Ende des Kolbens befindet sich bei ausgerückter Kupplung in jedem Verschleißzustand an der gleichen Position. Da sich diese Position nicht verändert, kann sie nahe an den Rand des Arbeitsraumes gelegt werden.

Da die Position des Kolbens bei ausgerückter Kupplung nicht von dem Verschleiß der Kupplung abhängt und somit sowohl bei neuer als auch bei verschlissener Kupplung gleich ist, wird der Verschleiß der Kupplung über die gemessene Induktivität der Spule bei eingerückter Kupplung bestimmt. In dieser Stellung der Kupplung ist die Position des Kolbens vom Zustand der Kupplung abhängig. Die Stellung des Kolbens bei eingerückter Kupplung ist folglich ein direktes Maß für den Verschleißzustand der Kupplung.

Weitere Einzelheiten und Vorteile der Erfindung ergeben sich aus der Beschreibung eines Ausführungsbeispiels, dass anhand der Zeichnung eingehend erläutert wird.

Es zeigt:

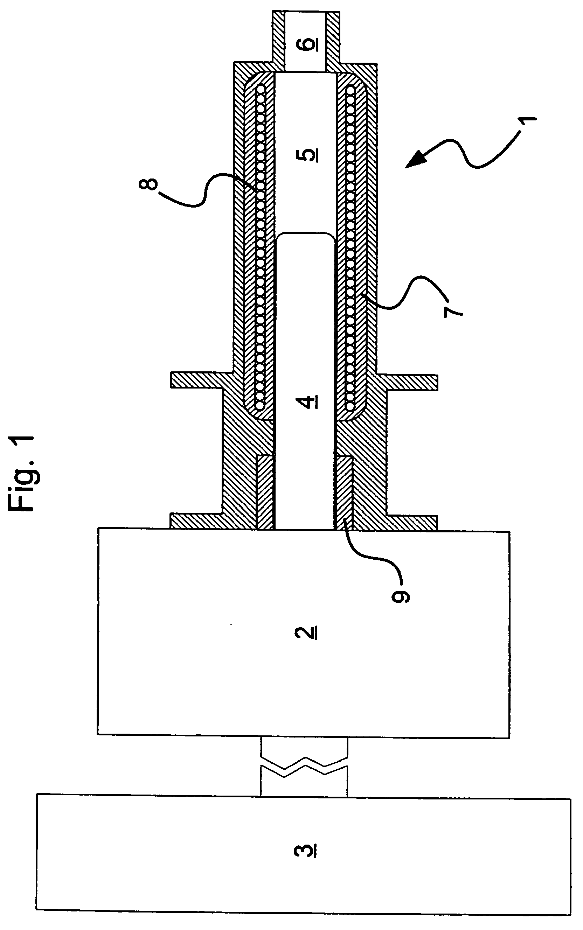

- Fig. 1: die Darstellung einer Ausführungsform der erfindungsgemäßen Vorrichtung.

Der Hydraulikzylinder 1 ist in der Zeichnung detailliert im Schnitt dargestellt, während der Pneumatik-Verstärker 2 und die Kupplung 3 lediglich schematisch angedeutet sind. Bei dem gezeigten Ausführungsbeispiel ist der Hydraulikzylinder 1 aus einem metallischen Werkstoff gefertigt. In seinem Arbeitsraum 5 befindet sich eine ringförmige Kunststoffhülse 7. In diese Kunststoffhülse 7 ist die Spule 8 integriert. Die Versorgung des Arbeitsraums 5 mit Hydraulikflüssigkeit erfolgt durch die Anschlussöffnung 6. An dieser Anschlussöffnung 6 wird eine hier nicht dargestellte Hydraulikleitung angeschlossen, die beispielsweise den Druck vom Kupplungspedal des Nutzfahrzeugs überträgt.

Der Arbeitsraum 5 ist durch den Kolben 4 in Zusammenwirkung mit einem Dichtungspaket 9, gegenüber einem Arbeitsraum in dem Pneumatik-Verstärker 2 abgedichtet. Das Dichtungspaket 9 kann in hier nicht gezeigter Weise aus einer Vielzahl einzelner Dichtungsringe zusammengesetzt sein und soll insbesondere verhindern, dass Druckluft aus dem Pneumatik-Verstärker in den Arbeitsraum des Hydraulikzylinders eindringt. Der Kolben 4 ragt mit seinem einen Ende in den Pneumatik-Verstärker 2 und ist dort in nicht gezeigter Weise mit diesem gekoppelt.

Die in der Zeichnung dargestellte Position des Kolbens 4 entspricht einer Kupplung 3 in eingerückter Stellung, die noch keinen Verschleiß zeigt. Durch Messung der Impedanz der Spule 8 wird diese Position des Kolbens 4 erkannt. Der zu dieser Stellung gehörende Impedanz-Wert wird als Null-Wert für die Ruhestellung des Kolbens bei neuer, eingerückter Kupplung abgespeichert. Alle weiteren Impedanzmessungen werden mit diesem Null-Wert verglichen.

Wird nun von dem Fahrer des Nutzfahrzeugs das Kupplungspedal betätigt, wird Hydraulikflüssigkeit durch die Anschlussöffnung 6 in den Arbeitsraum 5 gedrückt. Dadurch bewegt sich der Kolben 4 nach links und betätigt in hier nicht gezeigter Weise den Pneumatik-Verstärker 2. Ist der Kolben 4 beispielsweise aus Stahl gefertigt, wird sich bei dieser Bewegung die an der Spule 8 gemessene Impedanz erhöhen. Erreicht die gemessene Impedanz einen Wert, der einer bestimmten Erhöhung des gespeicherten Null-Werts und damit einer bestimmten Position des Kolbens 4 entspricht, wird an den Fahrer ein Signal übermittelt, dass sich die Kupplung 3 in ausgerückter Stellung befindet.

Gibt der Fahrer des Nutzfahrzeugs das Kupplungspedal wieder frei, bewegt sich der Kolben 4 wieder nach rechts in seine Ruhestellung. Die an der Spule 8 gemessene Impedanz verringert sich wieder auf den ursprünglichen Wert.

Mit zunehmender Zahl von Betriebsstunden ist die Kupplung 3 einem bestimmten Verschleiß unterworfen. Über die indirekte Kopplung der Kupplung 3 an den Kolben 4 macht sich dieser Verschleiß auch an der Position des Kolbens 4 bei eingerückter Kupplung 3 bemerkbar. Dabei verändert sich die Ruhestellung des Kolbens 4. Mit zunehmendem Verschleiß wandert die Ruhestellung des Kolbens 4 immer weiter nach rechts. Folglich verringert sich mit zunehmendem Verschleiß der Kupplung 3 die an der Spule 8 bei eingekuppelter Stellung gemessene Impedanz. Je weiter der Verschleiß der Kupplung 3 fortschreitet, desto geringer wird die an der Spule 8 gemessene Impedanz in der Ruhestellung des Kolbens 4. Auch dieser in Ruhestellung des Kolbens gemessene Impedanz-Wert wird jeweils mit dem gespeicherten Null-Wert verglichen. Verringert sich der in Ruhestellung gemessene Impedanz-Wert um einen vorbestimmten Betrag, ist die Kupplung 3 verschlissen und muss ausgetauscht werden. An den Fahrer des Nutzfahrzeugs wird in diesem Fall ein entsprechendes Signal übermittelt.

Die Position des Kolbens 4 bei ausgerückter Kupplung 3 ist dagegen nicht vom Verschleiß der Kupplung 3 abhängig. Der Verschleiß wird daher bei eingerückter Kupplung 3 in Ruhestellung des Kolbens 4 bestimmt.

Durch die Integration der Spule 8 in den Hydraulikzylinder 1 lässt sich die Position des Kolbens 4 direkt als Impedanzänderung an der Spule 8 messen. Um die Position des Kolbens 4 feststellen zu können, ist folglich kein zusätzlicher Platz notwendig. Weiterhin erfolgt zwischen dem Kolben 4 und der Spule 8 während der relativen Bewegung der beiden Teile zueinander keine Berührung und daher auch kein Verschleiß und keine Abnutzung.

### Bezugszeichenliste:

- 1: Hydraulikzylinder
- 2: Pneumatik-Verstärker
- 3: Kupplung
- 4: Hydraulikkolben
- 5: hydraulischer Arbeitsraum
- 6: Anschlussöffnung für die Hydraulikflüssigkeit
- 7: Kunststoffhülse
- 8: Spule
- 9: Dichtungspaket

## Patentansprüche

1. Vorrichtung zum Betätigen einer Kupplung (3) mit einem Hydraulikzylinder (1), der einen Arbeitsraum (5), einen Kolben (4) und eine Anschlussöffnung (6) für die Hydraulikflüssigkeit aufweist und mit einer Messeinrichtung zur Bestimmung der Position des Kolbens (4), wobei die Messeinrichtung eine Spule (8) in der Wandung des Hydraulikzylinders (1) aufweist, die den Arbeitsraum (5) des Hydraulikzylinders (1) zumindest teilweise umgibt, **dadurch gekennzeichnet, dass** die Spule in eine Kunststoffhülse (7) im Innern des Hydraulikzylinders (1) eingespritzt ist, und dass der Hydraulikzylinder (1) aus einem metallischen Werkstoff gefertigt ist.

2. Vorrichtung nach Anspruch 1, **dadurch gekennzeichnet, dass** die Messeinrichtung eine Einrichtung zur Bestimmung der Induktivität der Spule (8) aufweist.

3. Vorrichtung nach Anspruch 2, **dadurch gekennzeichnet, dass** zwischen dem Hydraulikzylinder (1) und der Kupplung (3) ein von dem Kolben (4) betätigter Pneumatik-Verstärker (2) vorgesehen ist.

4. Vorrichtung nach Anspruch 3, **dadurch gekennzeichnet, dass** in dem Hydraulikzylinder (1) ein den Kolben (4) umschließendes Dichtungspaket (9) zur Abdichtung des Arbeitsraums (5) des Hydraulikzylinders (1) gegen den Pneumatik-Verstärker (2) vorgesehen ist.

5. Vorrichtung nach Anspruch 1, **dadurch gekennzeichnet, dass** der Verschleiß der Kupplung (3) von der Messeinrichtung über die gemessene Induktivität der Spule (8) bei nicht betätigter Vorrichtung bestimmbar ist.

## Claims

1. Device for actuating a clutch (3), comprising a hydraulic cylinder including a workspace (5), a piston (4) and a connexion opening (6) for the hydraulic fluid, and comprising a measuring device in order to determine the position of said piston (4), wherein said measuring device includes a coil (8) in the wall of said hydraulic cylinder (1), which surrounds, at least partly, said workspace (5) of said hydraulic cylinder (1), **characterised in that** said coil is injected into a sleeve made of a synthetic material (7) within said hydraulic cylinder (1), and that said hydraulic cylinder (1) is made of a metal material.

2. Device according to Claim 1, **characterised in that** said measuring device comprises a means for determining the inductance of said coil (8).

3. Device according to Claim 2, **characterised in that** an amplifier of a pneumatic system (2) is mounted between said hydraulic cylinder (1) and said clutch (3), which is operated by said piston (4).

4. Device according to Claim 3, **characterised in that** a sealing package (9), which surrounds said piston (4), is disposed in said hydraulic cylinder (1) so as to seal said workspace (5) of said hydraulic cylinder (1) from said amplifier of the pneumatic system (2).

5. Device according to Claim 1, **characterised in that** the wear on said clutch (3) can be established by said measuring device via the inductance of said coil (8) when the device is not operated.

## Revendications

1. Dispositif d'actionnement d'un embrayage (3), comprenant un cylindre hydraulique renfermant un espace de travail (5), un piston (4) et une ouverture de connexion (6) pour le fluide hydraulique, et comprenant un dispositif de mesure afin de déterminer la position dudit piston (4), dans lequel ledit dispositif de mesure contient une bobine (8) dans la paroi dudit cylindre hydraulique (1), qui entoure, au moins en partie, ledit espace de travail (5) dudit cylindre hydraulique (1), **caractérisé en ce que** ladite bobine est injectée dans une douille en matière plastique (7) à l'intérieur dudit cylindre hydraulique (1), et **en ce que** ledit cylindre hydraulique (1) est fait en un matériau métallique.

2. Dispositif selon la revendication 1, **caractérisé en ce que** ledit dispositif de mesure comprend un moyen à déterminer l'inductance de ladite bobine (8).

3. Dispositif selon la revendication 2, **caractérisé en ce qu'**un amplificateur d'un système pneumatique (2) est monté entre ledit cylindre hydraulique (1) et ledit embrayage (3), qui est commandé par ledit piston (4).

4. Dispositif selon la revendication 3, **caractérisé en ce qu'**une garniture d'étanchéité (9), qui entoure ledit piston (4), est disposé dans ledit cylindre hydraulique (1) afin d'étanchéifier ledit espace de travail (5) dudit cylindre hydraulique (1) contre ledit amplificateur du système pneumatique (2).

5. Dispositif selon la revendication 1, **caractérisé en ce que** l'usure dudit embrayage (3) peut être établie par ledit dispositif de mesure via l'inductance de ladite bobine (8) quand le dispositif n'est pas actionné.
